# EUROPÄISCHE PATENTSCHRIFT

(11) **EP 3 287 231 B1**
(45) Veröffentlichungstag und Bekanntmachung des Hinweises auf die Patenterteilung: **04.11.2020**
(21) Anmeldenummer: 17020331.9
(22) Anmeldetag: 03.08.2017
(51) Int. Cl.: B23Q 3/157, B23Q 3/155

(54) **WERKZEUGWECHSELVORRICHTUNG UND BEARBEITUNGSZENTRUM MIT EINER WERKZEUGWECHSELVORRICHTUNG**
TOOL CHANGING DEVICE AND MACHINING CENTRE WITH A TOOL CHANGING DEVICE
DISPOSITIF DE CHANGEMENT D'OUTIL ET CENTRE D'USINAGE DOTÉ D'UN DISPOSITIF DE CHANGEMENT D'OUTIL

(30) Priorität: 24.08.2016 DE 202016005107 U
(43) Veröffentlichungstag der Anmeldung: 28.02.2018
(73) Patentinhaber: Hedelius Maschinenfabrik GmbH, 49716 Meppen (DE)
(72) Erfinder: Gerdes, Clemens, 49733 Haren (DE); Hempelmann, Dennis, 49716 Meppen (DE)
(74) Vertreter: Von Rohr Patentanwälte Partnerschaft mbB

(56) Entgegenhaltungen:
- EP-A1- 2 881 219
- EP-A2- 0 265 710
- DE-U1-202006 015 098

## Beschreibung

Die Erfindung betrifft eine Werkzeugwechselvorrichtung zur Verwendung in Verbindung mit einem verfahrbaren Fahrständer eines Bearbeitungszentrums zur maschinellen Bearbeitung eines Werkstückes mittels unterschiedlicher Werkzeuge mit den Merkmalen des Oberbegriffs von Anspruch 1. Gegenstand der Erfindung ist auch ein Bearbeitungszentrum dieser Art mit den Merkmalen des Oberbegriffs von Anspruch 8.

Bearbeitungszentren der in der Rede stehenden Art dienen im Maschinen- und Anlagenbau der Bearbeitung komplizierter Werkstücke an bis zu fünf Seiten bzw. einschließlich eines Umspannvorgangs an bis zu sechs Seiten mittels einer dreiachsigen oder fünfachsigen Bearbeitung. Dabei dient sowohl zur dreiachsigen als auch zur fünfachsigen Bearbeitung ein Fahrständer mit mindestens einer Spindel. Der Fahrständer ist zumeist nach Art eines X-Y-Z-Schlittens aufgebaut.

Der Fahrständer arbeitet zusammen mit einer Dreh-Schwenktischeinheit, auf der ein Werkstück aufgespannt ist. Somit lässt sich das Werkstück relativ zur Spindel um seine Hochachse komplett drehen und im Regelfall nach beiden Seiten um 90° schwenken. Zusammen mit der dreiachsigen Führung der Spindel ergibt sich die insgesamt fünfachsige Bearbeitungsmöglichkeit für das auf dem Drehtisch der Dreh-Schwenktischeinheit aufgespannte Werkstück.

Typische Bearbeitungen eines Werkstücks in einem solchen Bearbeitungszentrum sind Umformen, Trennen und Fügen von Werkstücken aus Metall. Grundsätzlich kann ein solches Bearbeitungszentrum auch für die Bearbeitung von Werkstücken aus Kunststoff oder Holz ausgelegt werden. Hauptanwendungsgebiet ist aber die spanende Metallbearbeitung wie Bohren oder Fräsen.

Bei der Spindel der Bearbeitungszentren der in der Rede stehenden Art handelt es sich um eine werkzeugtragende Motorspindel, d.h. in die Spindel ist ein Werkzeug eingesetzt, das von der Spindel während der Bearbeitung des Werkstücks rotiert wird. Dazu weist die Spindel eine Werkzeugschnittstelle auf. Die Werkzeugschnittstelle umfasst eine Werkzeugaufnahme zur Aufnahme eines Werkzeugs sowie einen Werkzeugspanner zur lösbaren Fixierung des Werkzeugs an der Spindel.

Bei solchen Bearbeitungszentren kann ein Wechsel des in der Spindel befindlichen Werkzeugs erforderlich werden, z. B. weil ein andersartiges Werkzeug zur weiteren Bearbeitung des Werkstücks nötig ist oder weil das eingesetzte Werkzeug defekt oder abgenutzt ist. Zum Wechseln des Werkzeugs kommt bei den Bearbeitungszentren der in Rede stehenden Art eine automatisierte Werkzeugwechselvorrichtung zum Einsatz.

Eine Werkzeugwechselvorrichtung im Sinne der vorliegenden Erfindung dient zur Entnahme eines Werkzeugs aus der Spindel, zum Transport des Werkzeugs zu einem Werkzeugmagazin bzw. Werkzeugspeicher, zur Übergabe des Werkzeugs an das Werkzeugmagazin, zur Entgegennahme eines anderen Werkzeugs vom Werkzeugmagazin, zum Transport dieses anderen Werkzeugs vom Werkzeugmagazin zur Spindel und zum Einsetzen dieses anderen Werkzeugs in die Spindel.

Eine wichtige Kenngröße einer Werkzeugwechselvorrichtung ist die Werkzeugwechselzeit bzw. die Span-zu-Span-Zeit bei automatischem Werkzeugwechsel (nach VDI-Richtlinie 2852 Blatt 1). Hier wird ein möglichst niedriger Wert angestrebt. Die Span-zu-Span- Zeit hat direkten Einfluss auf die Bearbeitungszeit, also die Zeit zur Bearbeitung des Werkstücks, bzw. die Durchlaufzeit.

Die bekannte Werkzeugwechselvorrichtung, von der die Erfindung ausgeht (EP 2 881 219 A1), verringert die Span-zu-Span-Zeit durch eine besondere Konstruktion des Tragarms und dessen Antriebs. Die beiden Werkzeugaufnahmen des Doppelgreifers sind bei diesem Tragarm in Umfangsrichtung des Schwenkkreises versetzt zueinander angeordnet, haben aber beide den gleichen Abstand zum Mittelpunkt des Schwenkkreises. Bezogen auf den Schwenkkreis sind die beiden Werkzeugaufnahmen nach außen offen ausgerichtet.

Aus der DE 20 2006 015 098 U1 geht eine Werkzeugmaschine hervor, die eine Bearbeitungseinheit, ein Werkzeugmagazin sowie einen Werkzeugwechsler aufweist, wobei die Bearbeitung in einer Schutzkabine erfolgt. Dabei ist der Werkzeugwechsler außerhalb der Schutzkabine vorgesehen und weist einen winkelförmigen Schwenkarm mit einem endseitigen Greifer für mindestens ein Werkzeug auf.

Die EP 0 265 710 A2 offenbart einen Werkzeugwechsler für programmgesteuerte Fräs- und Bohrmaschinen sowie Bearbeitungszentren, wobei ein schwenkbarer Tragarm vorgesehen ist, an dem eine Greiferzange befestigt ist. Die Greiferzange überführt ein Werkzeug vom Werkzeugmagazin zu einer Arbeitsspindel.

Allein durch Schwenken des Tragarms um die Schwenkachse kann somit die eine Werkzeugaufnahme des Doppelgreifers an diejenige Position bewegt werden, die die andere Werkzeugaufnahme des Doppelgreifers vor diesem Schwenken innehatte. Auf diese Weise muss die Spindel am verfahrbaren Fahrständer zum Wechseln der Werkzeuge nicht in X-Y-Ebene verfahren werden. Vielmehr schwenkt lediglich der Doppelgreifer am Tragarm von seiner ersten zu seiner zweiten Werkzeug-Wechselposition. Dieses Schwenken benötigt weniger Zeit als ein Verfahren der Spindel.

Bei der bekannten Werkzeugwechselvorrichtung, von der die Erfindung ausgeht, verläuft der Tragarm vom Schwenklager zum Doppelgreifer im Wesentlichen gerade, wenn auch in Z-Richtung leicht abgekröpft. Der Schwenkkreis hat daher einen relativ großen Durchmesser. Entsprechend breit muss der Freiraum im Bearbeitungszentrum zwischen der Werkzeugwechselvorrichtung und dem Fahrständer ausfallen. Dann, wenn in diesem Bereich eine Abgrenzung, beispielsweise eine Zwischenwand, vorgesehen ist, muss eine Durchtrittsöffnung in einer solchen Abgrenzung ebenfalls relativ breit ausfallen.

Der Lehre liegt das Problem zugrunde, die bekannte Werkzeugwechselvorrichtung so auszugestalten und weiterzubilden, dass sie im Schwenkbereich des Tragarms mit weniger Platz auskommt.

Das zuvor aufgezeigte Problem ist bei der erfindungsgemäßen Werkzeugwechselvorrichtung mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der auf die Werkzeugwechselvorrichtung gerichteten Unteransprüche.

Die Werkzeugwechselvorrichtung gemäß der Erfindung funktioniert von den Abläufen her genau so wie die aus dem Stand der Technik bekannte Werkzeugwechselvorrichtung und hat auch dieselben Vorteile hinsichtlich der Bearbeitungsgeschwindigkeit, der Robustheit und der Zuverlässigkeit. Insoweit kann also in vollem Umfange auf den Offenbarungsgehalt der EP 2 881 219 A1 verwiesen werden.

Anders als in dem zuvor genannten Stand der Technik ist aber der Tragarm zwischen dem Schwenklager und dem Doppelgreifer nicht im Wesentlichen gerade verlaufend ausgeführt, sondern ist in der Draufsicht in Z-Richtung als U-förmiger Bogen ausgeführt. Vom Schwenklager geht zunächst der erste Schenkel des Tragarms aus, geht in einen bogenförmigen Scheitel über und dieser wiederum geht in den bogenförmig bis zum Doppelgreifer verlaufenden zweiten Schenkel über. Die gesamte Länge des Tragarms zwischen Schwenklager und Doppelgreifer ist mit dieser Konstruktion wesentlich größer als der radiale Abstand des Doppelgreifers von der geometrischen Schwenkachse des Schwenklagers. Das hat verschiedene konstruktive und verfahrenstechnische Vorteile.

Die Formgebung des Tragarms ist für die Schwenkbewegung des Tragarms relativ zum Fahrständer des Bearbeitungszentrums von erheblicher Bedeutung.

Nach besonders bevorzugter Lehre ist vorgesehen, dass der Tragarm asymmetrisch ausgebildet ist, wobei der erste Schenkel eine wesentlich geringere Länge als der zweite Schenkel aufweist. Länge bedeutet in diesem Fall immer die dem Verlauf des Schenkels entlang dessen Mittellinie ermittelte Länge.

Im Detail entspricht es einer bevorzugten Lehre der Erfindung, dass der erste Schenkel im Wesentlichen gerade verläuft und, gemessen an der Mittellinie des ersten Schenkels von der geometrischen Schwenkachse des Schwenklagers aus bis zum Beginn des bogenförmigen Scheitels, eine Länge von 120 mm bis 240 mm, vorzugsweise von 150 mm bis 180 mm, aufweist.

Bevorzugt hat der zweite Schenkel eine Länge, gemessen an der Mittellinie bis zum Wendepunkt des Scheitels, von 200 mm bis 600mm, vorzugsweise von 320 mm bis 400 mm. Ganz besonders bevorzugt ist eine Konstruktion dieser Art, bei der der zweite Schenkel bogenförmig mit einem vom Scheitel zum Doppelgreifer hin abnehmenden Bogenradius verläuft. Hier wirkt das in der Draufsicht in Z-Richtung gebildete U am Ende des zweiten Schenkels in Höhe des Doppelgreifers nach innen eingezogen.

Eine besonders interessante Kenngröße für die Werkzeugwechselvorrichtung ist der Radius des Schwenkkreises. Bevorzugt ist der Tragarm der Werkzeugwechselvorrichtung so konstruiert, dass der Schwenkkreis , gemessen zwischen der geometrischen Schwenkachse des Schwenklagers und der Mitte der Werkzeugaufnahme des Doppelgreifers, einen Radius von 200 mm bis 400 mm, vorzugsweise von 220 mm bis 380 mm, weiter vorzugsweise von 260 mm bis 300 mm, aufweist. Da die gesamte Länge des ersten und zweiten Schenkels des Tragarms wesentlich größer ist als der Radius des Schwenkkreises hat der Tragarm die Möglichkeit, eine entsprechende einfädelnde Bewegung durchzuführen.

Was den Übergang vom ersten Schenkel zum zweiten Schenkel des Tragarms betrifft, so empfiehlt es sich, dass der Scheitel einen minimalen Bogenradius von 50 mm bis 100 mm, vorzugsweise von 60 mm bis 80 mm, aufweist.

Gegenstand der Erfindung ist auch ein Bearbeitungszentrum mit den Merkmalen des Oberbegriffs von Anspruch 8, das sich erfindungsgemäß durch die Merkmale des kennzeichnenden Teils von Anspruch 8 auszeichnet, insbesondere also durch den Einsatz einer erfindungsgemäßen Werkzeugwechselvorrichtung.

Besondere Bedeutung kommt der erfindungsgemäßen Werkzeugwechselvorrichtung in einem solchen erfindungsgemäßen Bearbeitungszentrum dann zu, wenn auf dem Maschinengrundträger seitlich des Werkstückpositionierbereiches eine Zwischenwand zur Begrenzung des Werkstückpositionierbereiches angeordnet ist.

Zur Bewegung der Werkzeuge mittels der Werkzeugwechselvorrichtung zwischen Werkzeugmagazin und Spindel am Fahrständer hat die Zwischenwand eine Durchtrittsöffnung. Das Werkzeugmagazin mit der Werkzeugwechselvorrichtung ist auf der vom Werkstückpositionierbereich abgewandten Seite der Zwischenwand angeordnet, der Fahrständer mit der Spindel befindet sich auf der Verfahrführung, die sich parallel zum Werkstückpositionierbereich erstreckt. Das Schwenklager des Tragarms der Werkzeugwechselvorrichtung ist erfindungsgemäß auf der vom Werkstückpositionierbereich abgewandten Seite nahe der Zwischenwand neben dem Rand der Durchtrittsöffnung in der Zwischenwand angeordnet. Der Tragarm ist relativ zur Zwischenwand so ausgerichtet, dass der Doppelgreifer von einer Stellung auf der vom Werkstückpositionierbereich abgewandten Seite der Zwischenwand durch die Durchtrittsöffnung hindurch in den Werkstückpositionierbereich hinein zur Spindel des Fahrständers schwenkbar ist.

Aufgrund der U-förmig gebogenen Ausgestaltung des Tragarms kann dieser in die erfindungsgemäß recht schmal ausführbare Durchtrittsöffnung bogenförmig bewegt einfädeln und dort hindurch in den Werkstückpositionierbereich eintreten. Die Durchtrittsöffnung kann deutlich schmaler sein als bei dem im Wesentlichen geraden Tragarm des oben geschilderten Standes der Technik.

Nach weiter bevorzugter Lehre der Erfindung ist vorgesehen, dass auch bei weitestmöglich zur Spindel hin geschwenktem Tragarm der erste Schenkel, der Scheitel und ein Teil des zweiten Schenkels des Tragarms auf der dem Schwenklager zugewandten Seite der Zwischenwand verbleibt.

Um während der Bearbeitung eines Werkstückes mit dem Bearbeitungswerkzeug den Werkstückpositionierbereich geschlossen zu haben, empfiehlt es sich, dass die Durchtrittsöffnung in der Zwischenwand mittels eines beweglichen Verschlusses, vorzugsweise in Form eine Faltwand, verschließbar ist.

Hinsichtlich der Anordnung des Schwenklagers relativ zur Durchtrittsöffnung empfiehlt es sich nach weiter bevorzugter Lehre, dass der Abstand des Randes der Durchtrittsöffnung bzw. bei Vorhandensein eines beweglichen Verschlusses des Randes des geöffneten Verschlusses von der geometrischen Schwenkachse des Schwenklagers zwischen 95% und 80% der Länge des ersten Schenkels, gemessen an der Mittellinie des ersten Schenkels von der geometrischen Schwenkachse des Schwenklagers aus bis zum Beginn des bogenförmigen Scheitels, beträgt.

Im Folgenden wird nun die Erfindung anhand einer lediglich ein bevorzugtes Ausführungsbeispiel darstellenden Zeichnung näher erläutert. In der Zeichnung zeigt
- Fig. 1: in einer perspektivischen Ansicht im Wesentlichen in Y-Richtung, ein bevorzugtes Ausführungsbeispiel eines erfindungsgemäßen Bearbeitungszentrums,
- Fig. 2: ausschnittweise den Bereich der Zwischenwand bei geschlossener Durchtrittsöffnung,
- Fig. 3: in einer Draufsicht in Z-Richtung den Bereich der Zwischenwand mit der Werkzeugwechselvorrichtung und geschlossener Durchtrittsöffnung,
- Fig. 4: in einer Fig. 2 entsprechenden Darstellung das Bearbeitungszentrum mit geöffneter Durchtrittsöffnung,
- Fig. 5: in einer Fig. 3 entsprechenden Draufsicht die Werkzeugwechselvorrichtung mit durch die Durchtrittsöffnung geschwenktem Tragarm.

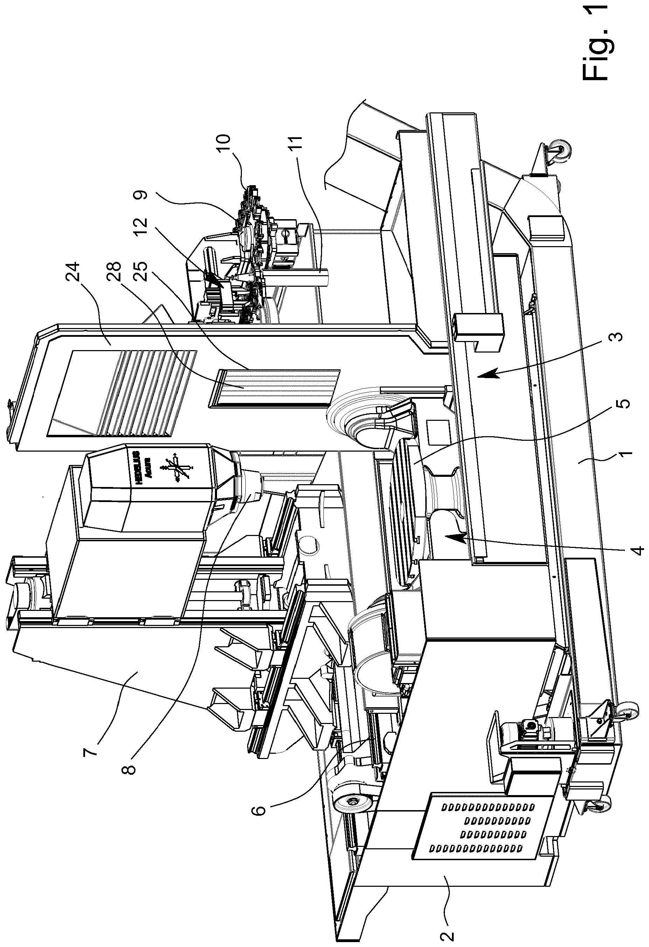

Das in Fig. 1 dargestellte Bearbeitungszentrum ist an sich in seinem Grundaufbau bekannt (EP 2 370 230 B1; EP 2 881 219 A1). Ein solches Bearbeitungszentrum weist zunächst einen Maschinengrundträger 1 auf, an dem eine umlaufende Schutzverkleidung 2 angebracht ist. Um das Innere des Bearbeitungszentrums erkennen zu können, ist die Schutzverkleidung 2 hier relativ weit unten abgeschnitten worden. Dadurch ist das Innenleben des Bearbeitungszentrums in Fig. 1 gut zu erkennen.

Der Maschinengrundträger 1 definiert mit seiner horizontalen Längsausrichtung eine X-Achse bzw. X-Richtung, in Fig. 1 von links nach rechts, mit seiner horizontalen Querausrichtung eine Y-Achse bzw. Y-Richtung, in Fig. 1 von vorn nach hinten in die Zeichnungsebene hinein, und mit seiner vertikalen Ausrichtung eine Z-Achse bzw. Z-Richtung, in Fig. 1 von oben nach unten.

In Fig. 1 erkennt man vorne am Maschinengrundträger 1 in der Schutzverkleidung eine Beschickungsöffnung 3. Die Beschickungsöffnung 3 wird regelmäßig durch eine Schutztür verschlossen, die aber in Fig. 1 aus zeichnerischen Gründen weggelassen worden ist.

Innerhalb der Schutzverkleidung 2 sieht man in Fig. 1 vorne einen Werkstückpositionierbereich 4, der von der Beschickungsöffnung 3 aus gut zugänglich ist. Im Werkstückpositionierbereich 4 sieht man eine übliche Dreh-Schwenktischeinheit 5, auf der ein hier nicht dargestelltes Werkstück festgespannt wird, um dann bearbeitet zu werden.

In Fig. 1 sieht man links hinter dem Werkstückpositionierbereich 4 eine sich ebenfalls in X-Richtung erstreckende Verfahrführung 6, auf der ein Fahrständer 7 in X-Richtung parallel zum Werkstückpositionierbereich 4 hin und her verfahrbar ist. Der Fahrständer 7 trägt eine werkzeugtragende, ihrerseits wieder verfahrbare Spindel 8. In Fig. 1 ist in der Spindel 8 kein Werkzeug eingesetzt.

Rechts in Fig. 1 sieht man ferner ein Werkzeugmagazin 9, das hier ortsfest am Maschinengrundträger 1 angeordnet ist und eine Mehrzahl von Werkzeugaufnahmen 10 für verschiedene einzelne Werkzeuge 11 aufweist. Ein einziges solches Werkzeug 11 ist in Fig. 1 rechts angedeutet.

In Fig. 1 rechts angedeutet ist schließlich auch eine Werkzeugwechselvorrichtung 12, mit der jeweils ein Werkzeug 11 von dem Werkzeugmagazin 10 zu der an dem Fahrständer 7 angebrachten verfahrbaren Spindel 8 und zurück transportierbar ist.

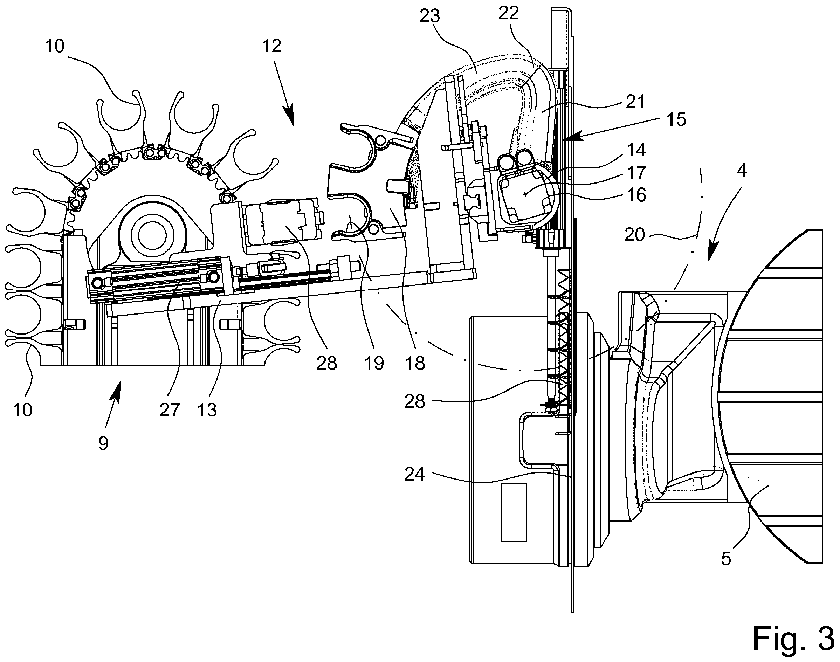

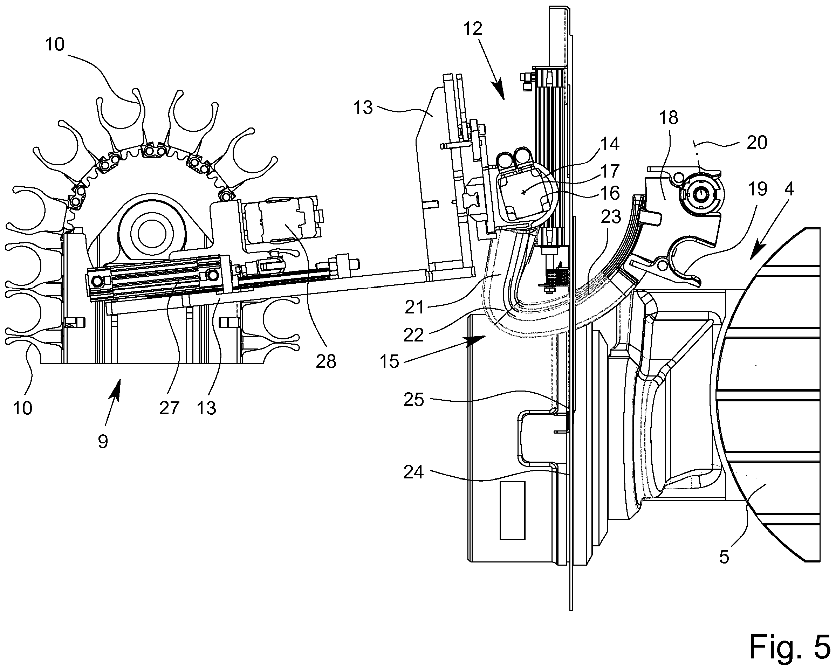

Zunächst geht es bei der Lehre der Erfindung um die Werkzeugwechselvorrichtung 12 und deren Ausgestaltung. Deshalb wird zunächst auf Fig. 3 und Fig. 5 verwiesen.

In Fig. 3 und Fig. 5 sieht man rechts den Werkstückpositionierbereich 4 mit der Dreh-Schwenktischeinheit 5 und links das Werkzeugmagazin 9. Am Werkzeugmagazin 9 befindet sich ein Querträger 13, der zur Werkzeugwechselvorrichtung 12 gehört. An dessen in Fig. 3 und Fig. 5 rechts liegendem Ende ist ein Schwenklager 14 angebracht, an dem ein Tragarm 15 mit einem Ende gelagert ist. Am Schwenklager 14 befindet sich ein hier nicht näher erläuterter Schwenkantrieb 16, bevorzugt ein elektromotorischer Antrieb, mit dessen Hilfe der Tragarm 15 um die geometrische, in Z-Richtung verlaufende Schwenkachse 17 des Schwenklagers 14 schwenkbar ist, und zwar von Fig. 3 ausgehend entgegen dem Uhrzeigersinn in die in Fig. 5 dargestellte Position und wieder zurück in die in Fig. 3 dargestellte Position.

Der Tragarm 15 hat an seinem anderen Ende einen Doppelgreifer 18 mit zwei Werkzeugaufnahmen 19. Mittels des Schwenklagers 14, genauer gesagt angetrieben vom Schwenkantrieb 16 am Schwenklager 14, ist der Tragarm 15 um die vertikale Schwenkachse 17 schwenkbar. Dadurch bewegen sich die Werkzeugaufnahmen 19 des Doppelgreifers 18 auf einem horizontalen Schwenkkreis 20, der in Fig. 3 durch die strichpunktierte Linie angedeutet ist.

Wie bereits im Stand der Technik verwirklicht worden ist (EP 2 881 219 A1), sind auch hier die beiden Werkzeugaufnahmen 19 des Doppelgreifers 18 in Umfangsrichtung des Schwenkkreises 20 versetzt angeordnet. Sie sind bezogen auf den Schwenkkreis 20 radial nach außen offen ausgerichtet und haben hier auch beide den gleichen Abstand zum Mittelpunkt des Schwenkkreises 20, also zur geometrischen Schwenkachse 17. Das hat hinsichtlich der Abläufe die oben im Einzelnen erläuterten Vorteile.

Wie Fig. 3 und Fig. 5 im Zusammenhang gut erkennen lassen, ist erfindungsgemäß vorgesehen, dass der Tragarm 15 zwischen dem Schwenklager 14 und dem Doppelgreifer 18 in der Draufsicht in Z-Richtung als U-förmiger Bogen ausgeführt ist mit einem vom Schwenklager 14 ausgehenden ersten Schenkel 21, der unter Ausbildung eines bogenförmigen Scheitels 22 in einen bis zum Doppelgreifer 18 verlaufenden zweiten Schenkel 23 übergeht.

Der Tragarm 15 ist also nicht, wie im Stand der Technik, in der Draufsicht in Z-Richtung im Wesentlichen gerade ausgeführt, sondern er ist abgewinkelt, und zwar hier nach bevorzugter Lehre asymmetrisch, wobei der erste Schenkel 21 eine wesentlich geringere Länge als der zweite Schenkel 23 aufweist. Die Definition der "Länge" ist in diesem Fall so zu verstehen, dass die Mittellinie des jeweiligen Schenkels 21, 23 gewählt und entlang ihrem Verlauf, ggf. auch bogenförmig, die Länge bestimmt wird.

Fig. 5 lässt besonders gut erkennen, wie im bevorzugten Ausführungsbeispiel, das hier dargestellt ist, der genaue Verlauf des Tragarms 15 vorgesehen ist. Dargestellt ist, dass der erste Schenkel 21 im Wesentlichen gerade verläuft. Gemessen an der Mittellinie des ersten Schenkels 21, von der geometrischen Schwenkachse des Schwenklagers 14 aus bis zum Beginn des bogenförmigen Scheitels 22, hat er hier eine Länge von beispielsweise etwa 160 mm.

Der zweite Schenkel 23 verläuft hier bogenförmig. Er hat hier im dargestellten und bevorzugten Ausführungsbeispiel eine Länge, hier gemessen an der Mittellinie des zweiten Schenkels 23, jedoch bis zum Wendepunkt des Scheitels 22, da der Übergang zwischen zweitem Schenkel 23 und Scheitel 22 fließend ist, von etwa 330 mm.

Sieht man genau hin, so erkennt man, dass sich der Bogenradius des zweiten Schenkels 23 vom Scheitel 22 zum Doppelgreifer 18 hin verringert. Der zweite Schenkel 23 des Tragarms 15 ist also zu seinem freien Ende hin etwas eingezogen, was die Kompaktheit des Aufbaus weiter verbessert.

Im Bereich des Scheitels 22 hat der Tragarm hier einen minimalen Bogenradius von etwa 70 mm.

Eine besonders wichtige Kenngröße für die Werkzeugwechselvorrichtung ist der Radius des horizontalen Schwenkkreises 20. Dieser wird gemessen zwischen der geometrischen vertikalen Schwenkachse 17 des Schwenklagers 14 und der Mitte der Werkzeugaufnahme 19 des Doppelgreifers 18, wie in Fig. 3 und 5 ersichtlich. Der so gemessene Radius des Schwenkkreises 20 hat im dargestellten und bevorzugten Ausführungsbeispiel eine Größe von etwa 285 mm. Bei einer kompakteren Werkzeugwechselvorrichtung kann man mit einem geringeren Radius bis hinunter zu etwa 220 mm arbeiten, bei einer größeren Werkzeugwechselvorrichtung kann sich aber auch durchaus ein Radius bis 380 mm oder etwas darüber ergeben. Die anderen Maße folgen in entsprechender Weise der Vorgabe durch den Radius des Schwenkkreises 20.

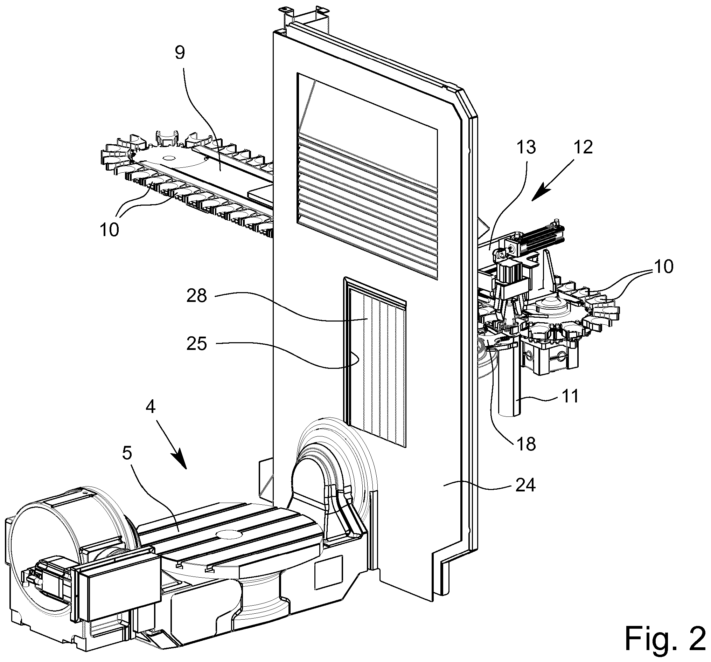

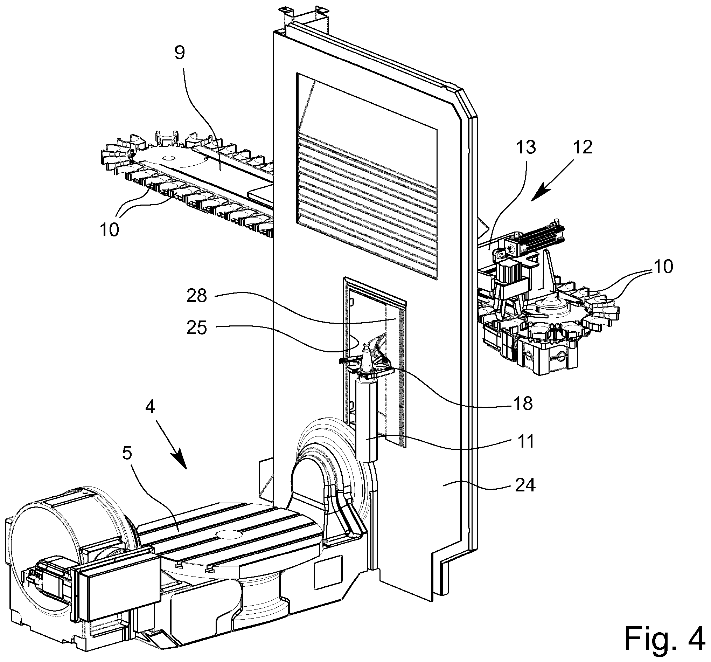

Den großen Vorteil des erfindungsgemäß gestalteten Tragarms 15 der Werkzeugwechselvorrichtung 12 erkennt man beim Vergleich von Fig. 2/3 einerseits mit Fig. 4/5 andererseits.

In dem zuvor genannten Ausführungsbeispiel, das in der Übersichtsdarstellung in Fig. 1 gut nachvollziehbar ist, befindet sich auf dem Maschinengrundträger 1 seitlich des Werkstückpositionierbereiches 4 eine Zwischenwand 24 zur Begrenzung des Werkstückpositionierbereiches 4. Beim Arbeiten im Werkstückpositionierbereich 4 wird Kühlschmiermittel verwendet, das soll nicht in Bereiche des Bearbeitungszentrums außerhalb des Werkstückpositionierbereiches 4 dringen. Die Zwischenwand 24 dient hier zur Abschirmung. Die Zwischenwand 24 weist eine Durchtrittsöffnung 25 auf. Diese Durchtrittsöffnung 25 dient dazu, mittels der Werkzeugwechselvorrichtung 12 ein Werkzeug 11 vom Werkzeugmagazin 9 zur Spindel 8 des Fahrständers 7 und umgekehrt zu transportieren. Mittels der Werkzeugwechselvorrichtung 12 wird ein solches Werkzeug 11 gewissermaßen durch die Durchtrittöffnung 25 in der Zwischenwand 24 hindurchgereicht.

Das Werkzeugmagazin 9 ist, wie sich bereits aus Fig. 1 ergibt, auf der vom Werkstückpositionierbereich 4 abgewandten Seite der Zwischenwand 24 angeordnet. Das Schwenklager 14 des Tragarms 15 der Werkzeugwechselvorrichtung 12 ist nahe der Zwischenwand 24 auf der vom Werkstückpositionierbereich 4 abgewandten Seite angeordnet, und zwar neben dem Rand der Durchtrittsöffnung 25. Das Schwenklager 14 kann evtl. an der Zwischenwand 24 ortsfest angebracht sein. Im dargestellten und bevorzugten Ausführungsbeispiel hingegen ist das Schwenklager 14 am Querträger 13 angebracht, der seinerseits am Werkzeugmagazin 9 angebracht ist.

Da das Werkzeugmagazin 9 im hiesigen Beispiel ortsfest angebracht ist, ist dies auch das Schwenklager 14. Möglich ist aber auch die Realisierung eines verfahrbaren Werkzeugmagazins 9. Dann kann das Schwenklager 14 gleichwohl ortsfest angeordnet sein als auch am Werkzeugmagazin 9 angebracht und mit diesem verfahrbar sein.

Am Querträger 13 befindet sich eine Übergabevorrichtung 26 mit einem Hydraulikantrieb 27, mit deren Hilfe ein Werkzeug aus einer Werkzeugaufnahme 10 des Werkzeugmagazins 9 an eine Werkzeugaufnahme 19 des Doppelgreifers 18 übergeben werden kann, wenn der Doppelgreifer 18 so steht, wie es sich aus Fig. 3 der Zeichnung ergibt.

Wichtig für die Anordnung von Fig. 3 und 5 bei dem erfindungsgemäßen Bearbeitungszentrum ist, dass der Tragarm 15 so ausgerichtet ist, dass der Doppelgreifer 18 durch die offene Durchtrittsöffnung 25 in den Werkstückpositionierbereich 4 hinein bis zur Spindel 8 des Fahrständers 7 schwenkbar ist (und umgekehrt). Das sieht man in Fig. 5. In Fig. 5 ist allerdings der Fahrständer 7 mit der Spindel 8 nicht zu sehen, er würde in Fig. 5 von rechts an die Übergabeposition des Doppelgreifers 18 herangefahren sein.

Fig. 4 lässt gut erkennen, wie der U-förmig gebogene Tragarm 15 mit dem Doppelgreifer 18 ein Werkzeug 11 durch die Durchtrittsöffnung 25 in der Zwischenwand 24 in den Werkstückpositionierbereich 4 hinein reicht, wo es von der Spindel 8 am Fahrständer 7 durch eine einfache Bewegung in Z-Richtung erfasst und angekoppelt werden kann.

Fig. 5 zeigt weiter, dass nach bevorzugter Lehre der Erfindung auch bei weitestmöglich zur Spindel 8 hin geschwenktem Tragarm 15 der erste Schenkel 21, der Scheitel 22 und ein Teil des zweiten Schenkels 23 des Tragarms 15 auf der dem Schwenklager 14 zugewandten Seite der Zwischenwand 24 verbleibt. Der erste Schenkel 21 läuft hier leicht schräg zur Zwischenwand 24 und erlaubt es, dass der zweite Schenkel 23 vom Scheitel 22 ausgehend um den Rand der Durchtrittsöffnung 25 herum in den Werkstückpositionierbereich 4 hinein geschwenkt wird.

Das dargestellte und bevorzugte Ausführungsbeispiel zeigt ferner, dass die Durchtrittsöffnung 25 in der Zwischenwand 24 mittels eines beweglichen Verschlusses 28, vorzugsweise in Form eine Faltwand, verschließbar ist. In Fig. 1 und 3 sieht man den Verschluss 28, der hier in Form einer Faltwand ausgeführt ist, verschlossen. In Fig. 4 und 5 ist der Verschluss 28 geöffnet.

Man sieht in Fig. 5 noch eine weitere Besonderheit der Lehre der Erfindung, bei der es darum geht, dass der Abstand des Randes der Durchtrittsöffnung 25 bzw. bei Vorhandensein eines beweglichen Verschlusses 28 des Randes des geöffneten Verschlusses 28 von der geometrischen Schwenkachse 17 des Schwenklagers 14 zwischen 95% und 80% der Länge des ersten Schenkels 21, gemessen an der Mittellinie des ersten Schenkels 21 von der geometrischen Schwenkachse 17 des Schwenklagers 14 aus bis zum Beginn des bogenförmigen Scheitels 22, beträgt.

Insgesamt wird mit der erfindungsgemäßen Konstruktion einer Werkzeugwechselvorrichtung 12 ein Bearbeitungszentrum geschaffen, das bei ebenso zweckmäßigen Abläufen wie im Stand der Technik gemäß der EP 2 881 219 A1 im Bereich der Übergabe der Werkzeuge an die Spindel 8 des Fahrständers 7 noch kompakter baut als bisher bekannt. Die Durchtrittsöffnung 25 in der Zwischenwand 24 kann wesentlich schmaler ausgeführt sein als bisher. Umso besser ist der Werkstückpositionierbereich 4 im Betrieb des Bearbeitungszentrums abgeschirmt.

### Bezugszeichenliste

- 1: Maschinengrundträger
- 2: Schutzverkleidung
- 3: Beschickungsöffnung
- 4: Werkstückpositionierbereich
- 5: Dreh-Schwenktischeinheit
- 6: Verfahrführung
- 7: Fahrständer
- 8: Spindel
- 9: Werkzeugmagazin
- 10: Werkzeugaufnahme in 9
- 11: Werkzeug
- 12: Werkzeugwechselvorrichtung
- 13: Querträger
- 14: Schwenklager
- 15: Tragarm
- 16: Schwenkantrieb
- 17: Schwenkachse
- 18: Doppelgreifer
- 19: Werkzeugaufnahme in 18
- 20: Schwenkkreis
- 21: erster Schenkel
- 22: Scheitel
- 23: zweiter Schenkel
- 24: Zwischenwand
- 25: Durchtrittsöffnung
- 26: Übergabevorrichtung
- 27: Hydraulikantrieb
- 28: Verschluss

## Patentansprüche

1. Werkzeugwechselvorrichtung zur Verwendung in Verbindung mit einem verfahrbaren Fahrständer (7) eines Bearbeitungszentrums zur maschinellen Bearbeitung eines Werkstückes mittels unterschiedlicher Werkzeuge (11),
mit einem Tragarm (15), der an einem Ende mittels eines Schwenklagers (14) gelagert ist, das im Bearbeitungszentrum anbringbar ist,
wobei der Tragarm (15) am anderen Ende einen Doppelgreifer (18) mit zwei Werkzeugaufnahmen (19) aufweist und mittels des Schwenklagers (14) um eine vertikale Schwenkachse (17) schwenkbar ist, so dass sich die Werkzeugaufnahmen (19) auf einem horizontalen Schwenkkreis (20) bewegen, wobei die beiden Werkzeugaufnahmen (19) des Doppelgreifers (18) in Umfangsrichtung des Schwenkkreises (20) versetzt angeordnet und bezogen auf den Schwenkkreis (20) radial nach außen offen ausgerichtet sind,
**dadurch gekennzeichnet,**
**dass** der Tragarm (15) zwischen dem Schwenklager (14) und dem Doppelgreifer (18) in der Draufsicht in Z-Richtung als U-förmiger Bogen ausgeführt ist mit einem vom Schwenklager (14) ausgehenden ersten Schenkel (21), der unter Ausbildung eines bogenförmigen Scheitels (22) in einen bogenförmig bis zum Doppelgreifer (18) verlaufenden zweiten Schenkel (23) übergeht.

2. Werkzeugwechselvorrichtung nach Anspruch1, **dadurch gekennzeichnet, dass** der Tragarm (15) asymmetrisch ausgebildet ist, wobei der erste Schenkel (21) eine wesentlich geringere Länge als der zweite Schenkel (23) aufweist.

3. Werkzeugwechselvorrichtung nach Anspruch 1 oder 2, **dadurch gekennzeichnet,**
**dass** der erste Schenkel (21) im Wesentlichen gerade verläuft und, gemessen an der Mittellinie des ersten Schenkels (21) von der geometrischen Schwenkachse (17) des Schwenklagers (14) aus bis zum Beginn des bogenförmigen Scheitels (22), eine Länge von 120 mm bis 240 mm, vorzugsweise von 150 mm bis 180 mm, aufweist.

4. Werkzeugwechselvorrichtung nach einem der Ansprüche 1 bis 3, **dadurch gekennzeichnet,**
**dass** der zweite Schenkel (23), gemessen an der Mittellinie bis zum Wendepunkt des Scheitels (22), eine Länge von 200 mm bis 600 mm, vorzugsweise von 320 mm bis 400 mm, aufweist.

5. Werkzeugwechselvorrichtung nach einem der Ansprüche 1 bis 4, **dadurch gekennzeichnet,**
**dass** der zweite Schenkel (23) einen vom Scheitel (22) zum Doppelgreifer (18) hin abnehmenden Bogenradius aufweist.

6. Werkzeugwechselvorrichtung nach einem der Ansprüche 1 bis 5, **dadurch gekennzeichnet,**
**dass** der Schwenkkreis (20), gemessen zwischen der geometrischen Schwenkachse (17) des Schwenklagers (14) und der Mitte der Werkzeugaufnahme (19) des Doppelgreifers (18), einen Radius von 200 mm bis 400 mm, vorzugsweise von 220 mm bis 380 mm, weiter vorzugsweise von 260 mm bis 300 mm, aufweist.

7. Werkzeugwechselvorrichtung nach einem der Ansprüche 1 bis 6, **dadurch gekennzeichnet,**
**dass** der Scheitel (22) einen minimalen Bogenradius von 50 mm bis 100 mm, vorzugsweise von 60 mm bis 80 mm, aufweist.

8. Bearbeitungszentrum zur maschinellen Bearbeitung eines Werkstücks mittels unterschiedlicher Werkzeuge (11),
mit einem Maschinengrundträger (1), dessen horizontale Längsausrichtung eine X-Achse (X-Richtung) definiert, dessen horizontale Querausrichtung eine Y-Achse (Y-Richtung) definiert und dessen vertikale Ausrichtung eine Z-Achse (Z-Richtung) definiert, und
auf dem Maschinengrundträger (1) einem sich in X-Richtung erstreckenden Werkstückpositionierbereich (4) und einer sich parallel zum Werkstückpositionierbereich (4) erstreckenden Verfahrführung (6),
wobei auf der Verfahrführung (6) ein verfahrbarer Fahrständer (7) mit einer werkzeugtragenden, verfahrbaren Spindel (8) parallel zum Werkstückpositionierbereich (4) hin und her verfahrbar ist, und
wobei das Bearbeitungszentrum ferner ein Werkzeugmagazin (9) mit einer Mehrzahl von Werkzeugaufnahmen (10) für verschiedene einzelne Werkzeuge (11) aufweist,
**dadurch gekennzeichnet,**
**dass** das Bearbeitungszentrum eine Werkzeugwechselvorrichtung (12) nach einem der Ansprüche 1 bis 7 aufweist, mit der jeweils ein Werkzeug (11) von dem Werkzeugmagazin (9) zu der an dem Fahrständer (7) angebrachten verfahrbaren Spindel (8) und zurück transportierbar ist.

9. Bearbeitungszentrum nach Anspruch 8, **dadurch gekennzeichnet,**
**dass** auf dem Maschinengrundträger (1) seitlich des Werkstückpositionierbereiches (4) eine Zwischenwand (24) zur Begrenzung des Werkstückpositionierbereiches (4) angeordnet ist,
**dass** die Zwischenwand (24) eine Durchtrittsöffnung (25) aufweist,
**dass** das Werkzeugmagazin (9) auf der vom Werkstückpositionierbereich (4) abgewandten Seite der Zwischenwand (24) angeordnet ist,
**dass** das Schwenklager (14) des Tragarms (15) der Werkzeugwechselvorrichtung (12) nahe der Zwischenwand (24) auf der vom Werkstückpositionierbereich (4) abgewandten Seite neben dem Rand der Durchtrittsöffnung (25) angeordnet ist und
**dass** der Tragarm (15) so ausgerichtet ist, dass der Doppelgreifer (18) durch die offene Durchtrittsöffnung (25) in den Werkstückpositionierbereich (4) hinein zur Spindel (8) des Fahrständers (7) schwenkbar ist.

10. Bearbeitungszentrum nach Anspruch 9, **dadurch gekennzeichnet,**
**dass** auch bei weitestmöglich zur Spindel (8) hin geschwenktem Tragarm (15) der erste Schenkel (21), der Scheitel (22) und ein Teil des zweiten Schenkels (23) des Tragarms (15) auf der dem Schwenklager (14) zugewandten Seite der Zwischenwand (24) verbleibt.

11. Bearbeitungszentrum nach Anspruch 9 oder 10, **dadurch gekennzeichnet,**
**dass** die Durchtrittsöffnung (25) in der Zwischenwand (24) mittels eines beweglichen Verschlusses (28), vorzugsweise in Form eine Faltwand, verschließbar ist.

12. Bearbeitungszentrum nach einem der Ansprüche 9 bis 11, **dadurch gekennzeichnet,**
**dass** der Abstand des Randes der Durchtrittsöffnung (25) bzw. bei Vorhandensein eines beweglichen Verschlusses (28) des Randes des geöffneten Verschlusses (28) von der geometrischen Schwenkachse (17) des Schwenklagers (14) zwischen 95% und 80% der Länge des ersten Schenkels (21), gemessen an der Mittellinie des ersten Schenkels (21) von der geometrischen Schwenkachse (17) des Schwenklagers (14) aus bis zum Beginn des bogenförmigen Scheitels (22), beträgt.

## Claims

1. Tool changing device for use in conjunction with a movable travelling column (7) of a machining centre for machining a workpiece by means of different tools (11),
with a support arm (15), which is mounted at one end by means of a pivot bearing (14), which can be mounted in the machining centre,
wherein the support arm (15) has a double gripper (18) with two tool holders (19) at the other end and is pivotable about a vertical pivot axis (17) by means of the pivot bearing (14) so that the tool holders (19) move on a horizontal pivot circle (20), wherein the two tool holders (19) of the double gripper (18) are arranged offset in the circumferential direction of the pivot circle (20) and are oriented radially outwardly open with respect to the pivot circle (20),
**characterized in that,**
the support arm (15) between the pivot bearing (14) and the double gripper (18) is designed as a U-shaped arc in the Z-direction in the plan view, with a first leg (21) which starts from the pivot bearing (14) and merges into a second leg (23) running in an arc as far as the double gripper (18), forming an arc-shaped apex (22).

2. Tool changing device according to claim 1, **characterized in that**
the support arm (15) is asymmetrically formed, the first leg (21) having a substantially smaller length than the second leg (23).

3. Tool changing device according to claim 1 or 2, **characterized in that**
the first leg (21) extends substantially straight and, measured on the centre line of the first leg (21) from the geometric pivot axis (17) of the pivot bearing (14) to the beginning of the arc-shaped apex (22), has a length of 120 mm to 240 mm, preferably of 150 mm to 180 mm.

4. Tool changing device according to any one of claims 1 to 3, **characterized in that**
the second leg (23), measured from the centre line to the turning point of the apex (22), has a length of 200 mm to 600 mm, preferably of 320 mm to 400 mm.

5. Tool changing device according to any one of claims 1 to 4, **characterized in that**
the second leg (23) has an arc radius which decreases from the apex (22) towards the double gripper (18).

6. Tool changing device according to any one of claims 1 to 5, **characterized in that**
the pivot circle (20), measured between the geometric pivot axis (17) of the pivot bearing (14) and the centre of the tool holder (19) of the double gripper (18), has a radius of 200 mm to 400 mm, preferably of 220 mm to 380 mm, more preferably of 260 mm to 300 mm.

7. Tool changing device according to any one of claims 1 to 6, **characterized in that**
the apex (22) has a minimum arc radius of 50 mm to 100 mm, preferably of 60 mm to 80 mm.

8. Machining centre for machining a workpiece by means of different tools (11), having a machine base carrier (1) whose horizontal longitudinal orientation defines an X axis (X direction), whose horizontal transverse orientation defines a Y axis (Y direction) and whose vertical orientation defines a Z axis (Z direction), and
on the machine base carrier (1) a workpiece positioning area (4) extending in the X-direction and a traverse guide (6) extending parallel to the workpiece positioning area (4),
wherein a movable travelling column (7) with a tool-carrying, movable spindle (8) can be moved back and forth on the travelling guide (6) parallel to the workpiece positioning area (4), and
wherein the machining center further comprises a tool magazine (9) having a plurality of tool holders (10) for different individual tools (11),
**characterized in that,**
the machining center has a tool changing device (12) according to one of claims 1 to 7, with which a tool (11) can be transported in each case from the tool magazine (9) to the movable spindle (8) mounted on the travelling column (7) and back.

9. Machining center according to claim 8, **characterized in that**
an intermediate wall (24) for delimiting the workpiece positioning area (4) is arranged on the machine base carrier (1) to the side of the workpiece positioning area (4),
that the intermediate wall (24) has a through opening (25),
**in that** the tool magazine (9) is arranged on the side of the partition wall (24) facing away from the workpiece positioning region (4),
that the pivot bearing (14) of the support arm (15) of the tool changing device (12) is arranged close to the intermediate wall (24) on the side facing away from the workpiece positioning area (4) next to the edge of the through opening (25), and
**in that** the support arm (15) is aligned such that the double gripper (18) can be pivoted through the open through opening (25) into the workpiece positioning area (4) towards the spindle (8) of the travelling column (7).

10. Machining center according to claim 9, **characterized in that**,
even when the support arm (15) is pivoted as far as possible towards the spindle (8), the first leg (21), the apex (22) and part of the second leg (23) of the support arm (15) remain on the side of the intermediate wall (24) facing the pivot bearing (14).

11. Machining center according to claim 9 or 10, **characterized in that**
the through opening (25) in the intermediate wall (24) can be closed by means of a movable closure (28), preferably in the form of a folding wall.

12. Machining center according to one of the claims 9 to 11, **characterized in that**
the distance of the edge of the through opening (25) or, in the presence of a movable closure (28), of the edge of the opened closure (28) from the geometric pivot axis (17) of the pivot bearing (14) is between 95% and 80% of the length of the first leg (21), measured on the center line of the first leg (21) from the geometric pivot axis (17) of the pivot bearing (14) to the beginning of the arc-shaped apex (22).

## Revendications

1. Dispositif de changement d'outils à utiliser en liaison avec une colonne mobile (7) d'un centre d'usinage pour l'usinage d'une pièce au moyen de différents outils (11),
avec un bras de support (15), qui est monté à une extrémité au moyen d'un palier pivotant (14), qui peut être monté dans le centre d'usinage,
dans lequel le bras de support (15) comporte une double pince (18) avec deux porte-outils (19) à l'autre extrémité et peut pivoter autour d'un axe de pivotement vertical (17) au moyen du palier pivotant (14) de sorte que les porte-outils (19) se déplacent sur un cercle de pivotement horizontal (20),
dans lequel les deux porte-outils (19) de la double pince (18) sont disposés de manière décalée dans la direction circonférentielle du cercle de pivotement (20) et sont orientés radialement vers l'extérieur, ouverts par rapport au cercle de pivotement (20),
**caractérisé,**
**en ce que** le bras de support (15) entre le palier pivotant (14) et la double pince (18) est conçu en vue de dessus comme un arc en forme de U dans la direction Z, avec une première branche (21) qui part du palier de pivotement (14) et se transformeen une deuxième branche (23) s'étendant en arc jusqu'à la double pince (18), en formant un sommet (22) en forme d'arc.

2. Dispositif de changement d'outils selon la revendication 1, **caractérisé en ce que**
le bras de support (15) est de forme asymétrique, la première branche (21) ayant une longueur sensiblement inférieure à celle de la seconde branche (23).

3. Dispositif de changement d'outils selon la revendication 1 ou 2, **caractérisé en ce que**
la première branche (21) s'étend de façon sensiblement rectiligne et, mesurée sur l'axe central de la première branche (21) à partir de l'axe géométrique de pivotement (17) du palier de pivotement (14) jusqu'au début de l'apex en forme d'arc (22), a une longueur de 120 mm à 240 mm, de préférence de 150 mm à 180 mm.

4. Dispositif de changement d'outils selon l'une quelconque des revendications 1 à 3, **caractérisé en ce que**
la deuxième branche (23), mesurée de la ligne centrale au point de rotation du sommet (22), a une longueur de 200 mm à 600 mm, de préférence de 320 mm à 400 mm.

5. Dispositif de changement d'outils selon l'une quelconque des revendications 1 à 4, **caractérisé en ce que**
la deuxième branche (23) a un rayon d'arc qui diminue du sommet (22) vers la double pince (18).

6. Dispositif de changement d'outils selon l'une quelconque des revendications 1 à 5, **caractérisé en ce que**
le cercle de pivotement (20), mesuré entre l'axe géométrique de pivotement (17) du palier pivotant (14) et le centre du porte-outil (19) de la pince double (18), a un rayon de 200 mm à 400 mm, de préférence de 220 mm à 380 mm, plus préférablement de 260 mm à 300 mm.

7. Dispositif de changement d'outils selon l'une quelconque des revendications 1 à 6, **caractérisé par** que
l'apex (22) a un rayon d'arc minimum de 50 mm à 100 mm, de préférence de 60 mm à 80 mm.

8. Centre d'usinage pour l'usinage d'une pièce au moyen de différents outils (11), avec un support de base de la machine (1), dont l'orientation longitudinale horizontale définit un axe X (direction X), dont l'orientation transversale horizontale définit un axe Y (direction Y) et dont l'orientation verticale définit un axe Z (direction Z), et
sur le support de base de la machine (1), une zone de positionnement de la pièce (4) s'étendant dans la direction X et un guide de déplacement (6) s'étendant parallèlement à la zone de positionnement de la pièce (4),
dans lequel une colonne mobile (7) avec une broche mobile porte-outil (8) peut être déplacée d'avant en arrière sur le guide de déplacement (6) parallèlement à la zone de positionnement de la pièce (4), et
dans lequel le centre d'usinage comprend en outre un magasin d'outils (9) ayant une pluralité de porte-outils (10) pour différents outils individuels (11),
**caractérisé en ce que,**
le centre d'usinage comporte un dispositif de changement d'outil (12) selon l'une des revendications 1 à 7, avec lequel un outil (11) peut être transporté dans chaque cas du magasin d'outils (9) à la broche mobile (8) montée sur la colonne mobile (7) et retour.

9. Centre d'usinage selon la revendication 8, **caractérisé en ce que**
une paroi intermédiaire (24) destinée à délimiter la zone de positionnement de la pièce (4) est disposée sur le support de base de la machine (1), à côté de la zone de positionnement de la pièce (4),
**en ce que** la paroi intermédiaire (24) comporte une ouverture traversante (25),
**en ce que** le magasin d'outils (9) est disposé sur le côté de la paroi intermédiare (24) opposé à la zone de positionnement de la pièce (4),
**en ce que** le palier pivotant (14) du bras de support (15) du dispositif de changement d'outil (12) est disposé à proximité de la paroi intermédiaire (24) sur le côté opposé à la zone de positionnement de la pièce (4), à côté du bord de l'ouverture traversante (25), et
**en ce que** le bras de support (15) est orienté de telle sorte que la double pince (18) peut être pivotée à travers l'ouverture traversante (25) dans la zone de positionnement de la pièce (4) vers la broche (8) de la colonne mobile (7).

10. Centre d'usinage selon la revendication 9, **caractérisé en ce que**,
même lorsque le bras de support (15) est pivoté le plus loin possible vers la broche (8), la première branche (21), le sommet (22) et une partie de la deuxième branche (23) du bras de support (15) restent sur le côté de la paroi intermédiaire (24) tourné vers le palier pivotant (14).

11. Centre d'usinage selon la revendication 9 ou 10, **caractérisé en ce que** l'ouverture traversante (25) dans la paroi intermédiaire (24) peut être fermée au moyen d'une fermeture mobile (28), de préférence sous la forme d'une paroi pliante.

12. Centre d'usinage selon l'une des revendications 9 à 11, **caractérisé en ce que** la distance du bord de l'ouverture traversante (25) et/ou, en présence d'une fermeture mobile (28), du bord de la fermeture ouverte (28) par rapport à l'axe géométrique de pivotement (17) du palier pivotant (14) est comprise entre 95% et 80% de la longueur de la première branche (21), mesurée sur l'axe central de la première branche (21) depuis l'axe géométrique de pivotement (17) du palier pivotant (14) jusqu'au début du sommet (22) en forme d'arc.
